# EUROPEAN PATENT APPLICATION

(11) **EP 2 187 624 A1**
(43) Date of publication of application: **19.05.2010**
(21) Application number: 09175455.6
(22) Date of filing: 10.11.2009
(51) Int. Cl.: H04N 5/232, G06T 7/00

(54) **Autofocus system**

(30) Priority: 18.11.2008 JP 2008294513
(71) Applicant: Fujinon Corporation, Kita-ku Saitama (JP)
(72) Inventor: Yata, Kunio, Saitama Saitama (JP)
(74) Representative: Klunker . Schmitt-Nilson . Hirsch

(57) **Abstract**

By performing a tap operation on any one of the buttons on a screen of a liquid crystal display equipped with a touch panel for performing an operation input on the AF frame auto-tracking, it is possible to select a desired mode among a fixation mode, an object tracking mode, a face detection tracking mode, and a face recognition tracking mode. The fixation mode is suitable to set a position of the AF frame by means of manual operation.

The object tracking mode is suitable to allow the AF frame to automatically track a desired subject other than a face. The face detection tracking mode is suitable to allow the AF frame to track a face of an arbitrary person previously not registered. The face recognition tracking mode is suitable to allow the AF frame to track a face of a specific person previously registered.

## Description

### BACKGROUND

### 1. Technical Field

The present invention relates to an autofocus system, and particularly, to an autofocus system having an AF frame auto-tracking function for allowing an AF frame (an AF area), which represents an area of a subject brought into focus by autofocus (AF), to automatically track a predetermined subject.

### 2. Related Art

Generally, in autofocus (AF) systems for automatically adjusting the focus of a camera, the camera requires instruction on where to focus. In the general cameras, a focusing position is fixed on the center of a photographing area, for example a person and the like at the center of the photographing area are made to come into focus.

However, when a moving subject is photographed, it is not preferable that the focusing position is fixed as described above. Accordingly, there is proposed an AF area auto-tracking system which changes autofocus (AF) area in accordance with movement of a subject in order to bring the subject into focus when a quickly moving subject in sporting scenes is photographed by, for example, a TV camera and the like (for example, see Patent Document 1 (JP-A-2006-267221 corresponding to US-A-2006/0140612)). In the present specification, the AF frame indicating the outline of the AF area mostly refers to the area of the subject brought into focus similarly to the AF area.

In addition, there is proposed a digital camera which detects an image representing a face of a person in the taken images, and automatically brings into focus the face as the subject or automatically changes a zoom ratio so as to magnify the area in which the face is displayed (for example, see Patent Document 2 (JP-A-2004-320286 corresponding to US-A-2004/0207743)).

However, the tracking target subject subjected to the auto-tracking of the AF frame is not limited to the face of the person, and may be various things. Accordingly, it is difficult to appropriately perform the auto-tracking of the AF frame in the same processing algorithm regardless of the type of the tracking target subject.

### SUMMARY

Illustrative aspects of the present invention provide an autofocus system capable of performing the auto-tracking of the AF frame suitable for the subject set as the tracking target.
[1] According to an aspect of the invention, an autofocus system includes: an image pickup unit that takes a subject image formed by an optical system; an autofocus unit that performs focus adjustment of the optical system so as to bring into focus a subject within a predetermined AF frame area in a photographing image taken by the image pickup unit; and an AF frame control unit that changes the AF frame area. The AF frame control unit includes: an AF frame auto-tracking unit that allows the AF frame to automatically track a tracking target subject by detecting the tracking target subject in the photographing image taken by the image pickup unit and automatically changing the AF frame so as to correspond to an area of the detected tracking target subject, the AF frame auto-tracking unit having a plurality of tracking modes capable of setting different subjects as the tracking target subject; and a selection unit that selects auto-tracking of the AF frame based on a desired tracking mode among the plurality of tracking modes.
[2] The autofocus system of [1], the plurality of tracking mode may include at least two tracking modes among a first tracking mode of setting an arbitrary object as the tracking target subject, a second tracking mode of setting a face of an arbitrary person as the tracking target subject, and a third tracking mode of setting a face of a predetermined specific person as the tracking target subject.
[3] The autofocus system of [2], the AF frame control unit, in the first tracking mode, may store the tracking target subject as a reference pattern and detect the area of the tracking target subject in the photographing image through a pattern matching process of detecting an image area matching with the reference pattern in the photographing image.
[4] The autofocus system of [2] or [3], the AF frame control unit, in the second tracking mode, may detect an image area of the face of the arbitrary person in the photographing image through a face detection process and detect an area of the tracking target subject in the photographing image on the basis of the detected image area.
[5] The autofocus system of any one of [2] to [4],
   in the third tracking mode, information on the face of the predetermined specific person may be set as identification data. And the AF control unit, in the third tracking mode, may detect the area of the tracking target subject in the photographing image by detecting the image area of the face of the specific person in the photographing image through a face recognition process using the identification data.
[6] The autofocus system of any one of [1] to [5], the AF frame control unit may further comprise: a manual change unit that changes the area of the AF frame on the basis of manual operation of an operator.

With the configuration of [1] to [6], it is possible to perform the auto-tracking of the AF frame suitable for the type of the subject by selecting the tracking mode suitable for the subject set as the tracking target of the AF frame.

### BRIEF DESCRIPTION OF THE DRAWINGS

Fig. 1 is an exterior view illustrating a TV camera system according to an exemplary embodiment of the invention.
Fig. 2 is a block diagram illustrating an entire configuration of an AF frame auto-tracking system applied to the TV camera system of Fig. 1.

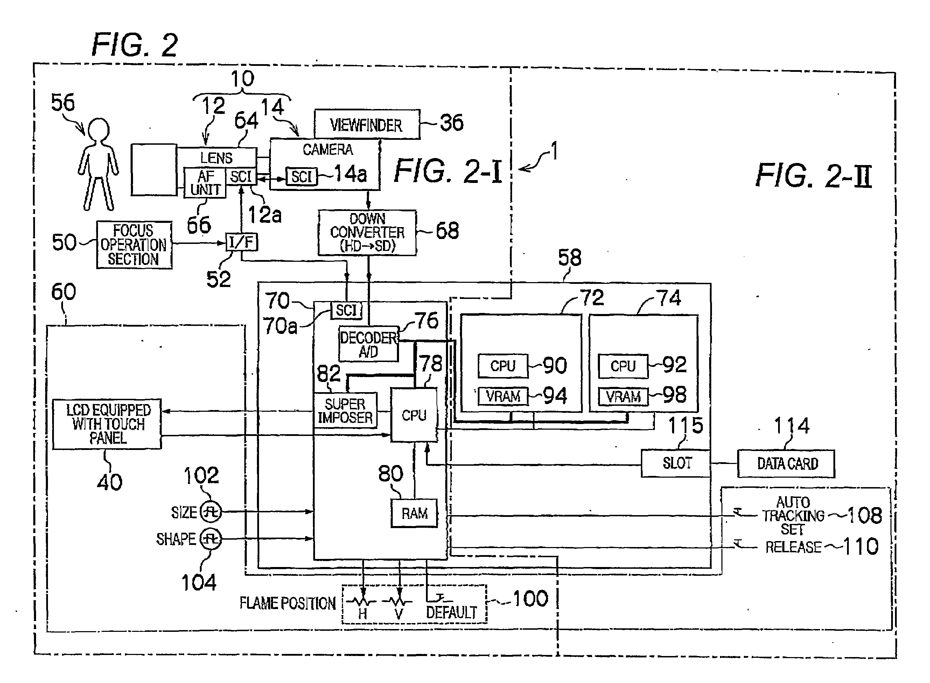

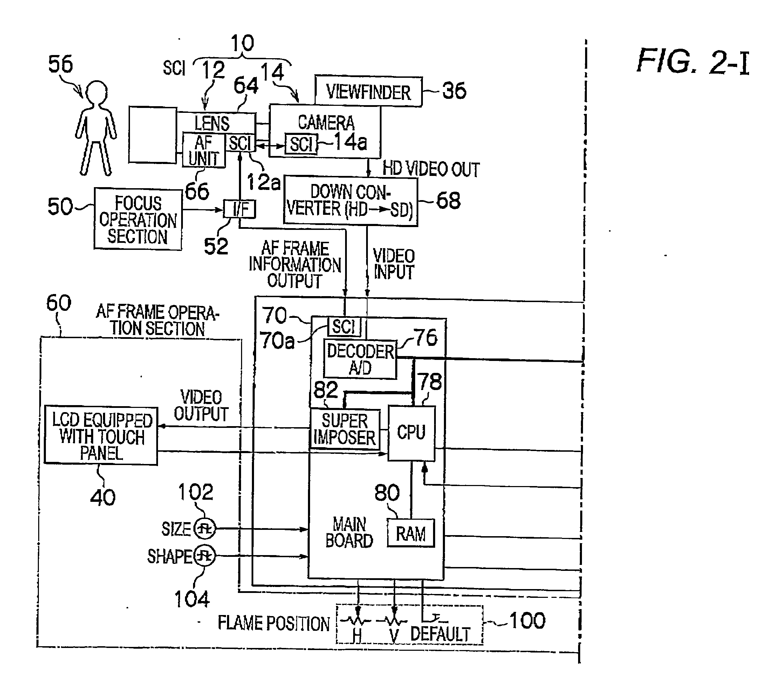

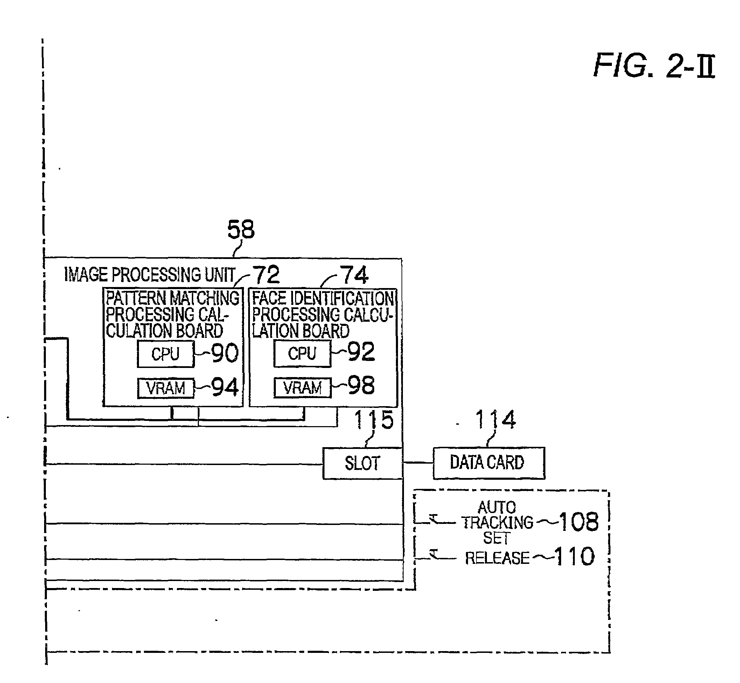

Figs. 2-I and 2-II are partial block diagrams of Fig.2.

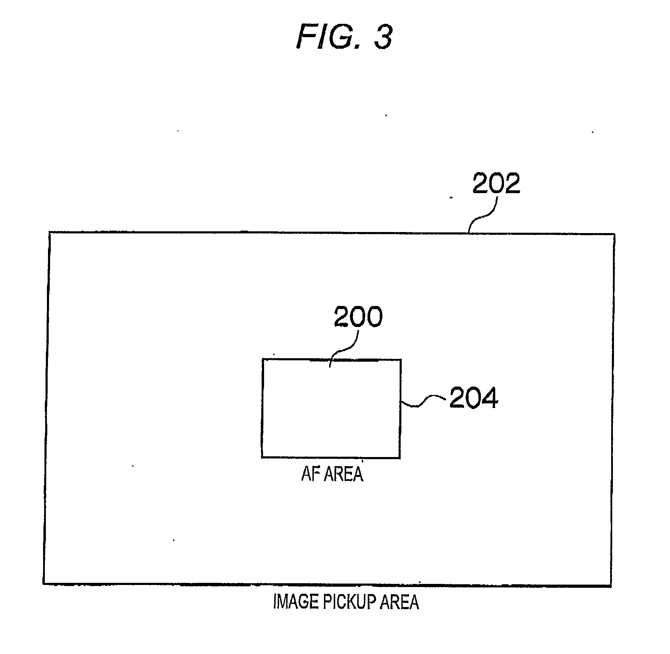

Fig. 3 is an explanatory diagram of an AF frame (an AF area).

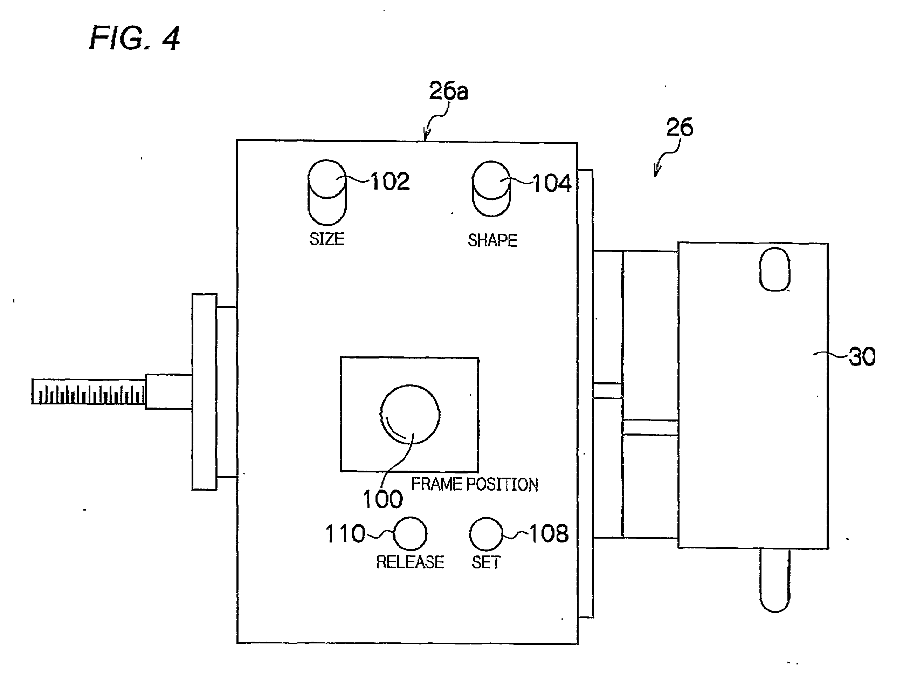

Fig. 4 is an exterior diagram of a focus demand.

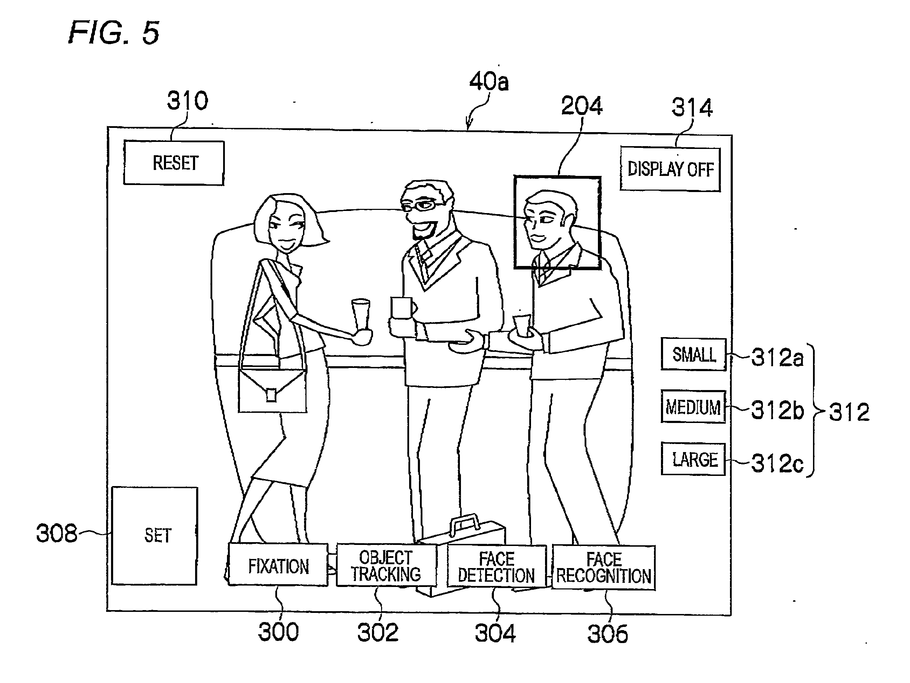

Fig. 5 is a diagram illustrating an example of a screen displayed on a liquid crystal display equipped with a touch panel.

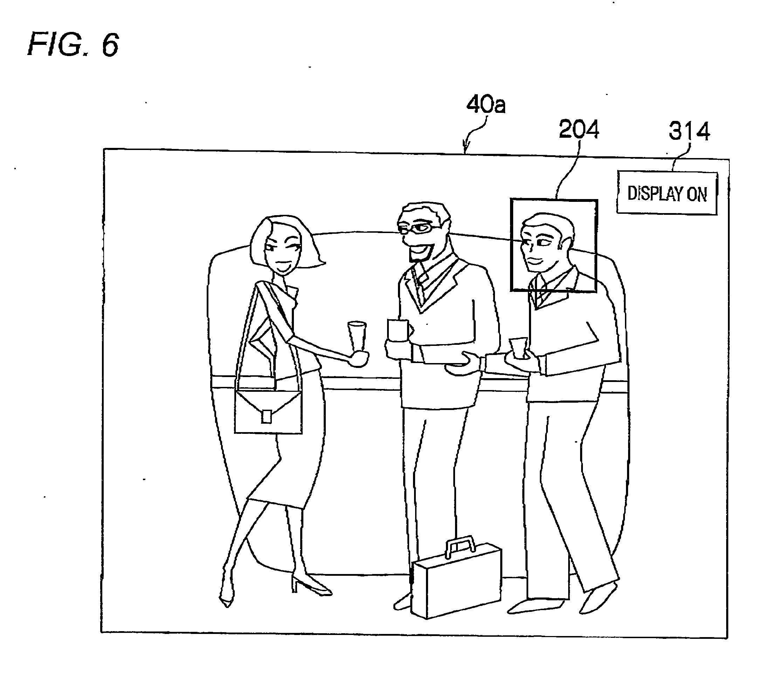

Fig. 6 is a diagram illustrating the case where display of a menu screen displayed on the liquid crystal display equipped with the touch panel is turned off.

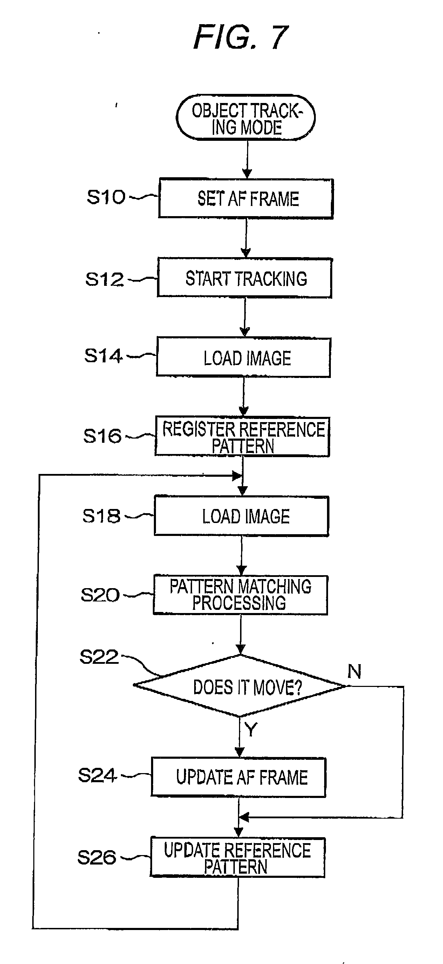

Fig. 7 is a flowchart illustrating a processing procedure of an object tracking mode.

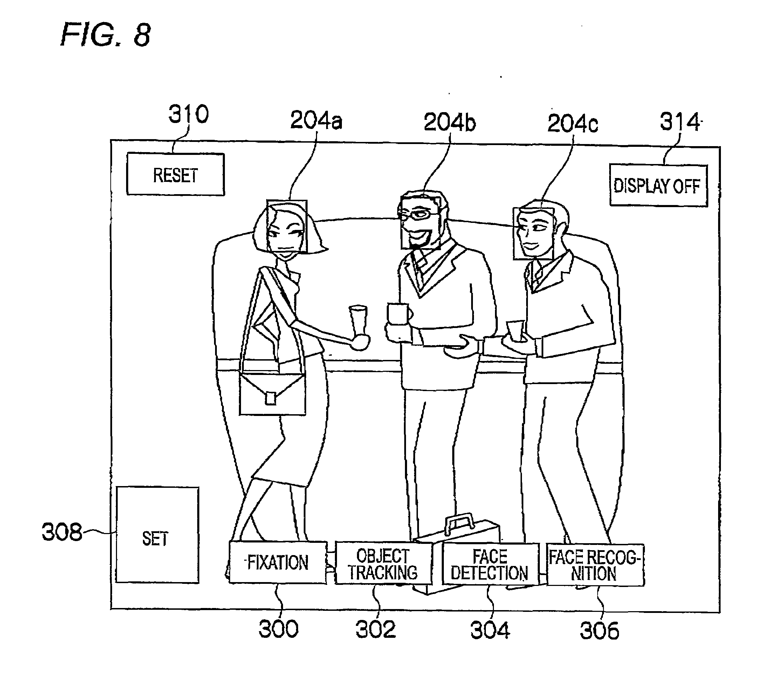

Fig. 8 is a diagram illustrating an example of a screen displayed on the liquid crystal display equipped with the touch panel in a face detection tracking mode.

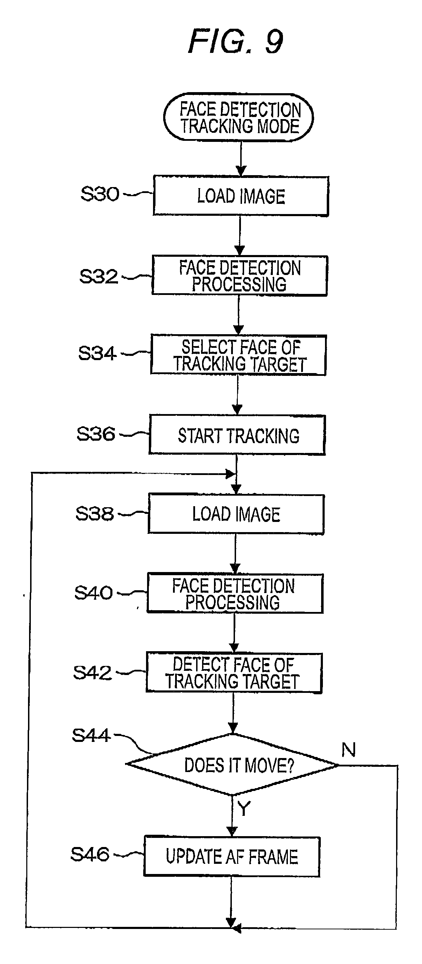

Fig. 9 is a flowchart illustrating a processing procedure of the face detection tracking mode.

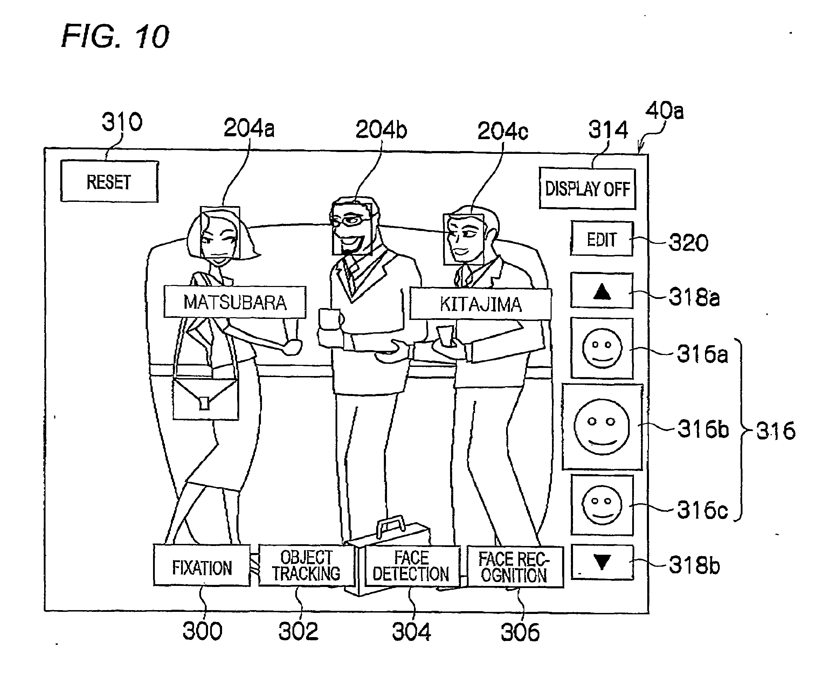

Fig. 10 is a diagram illustrating an example of the screen displayed on the liquid crystal display equipped with the touch panel in a face recognition mode.

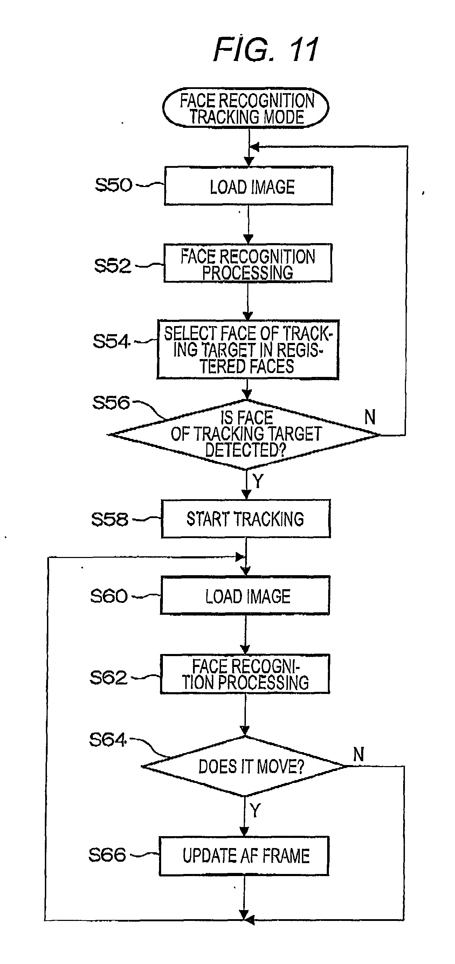

Fig. 11 is a flowchart illustrating a processing procedure of the face recognition mode.

### DETAILED DESCRIPTION

Hereinafter, an autofocus system according to an exemplary embodiment of the invention will be described with reference to the accompanying drawings.

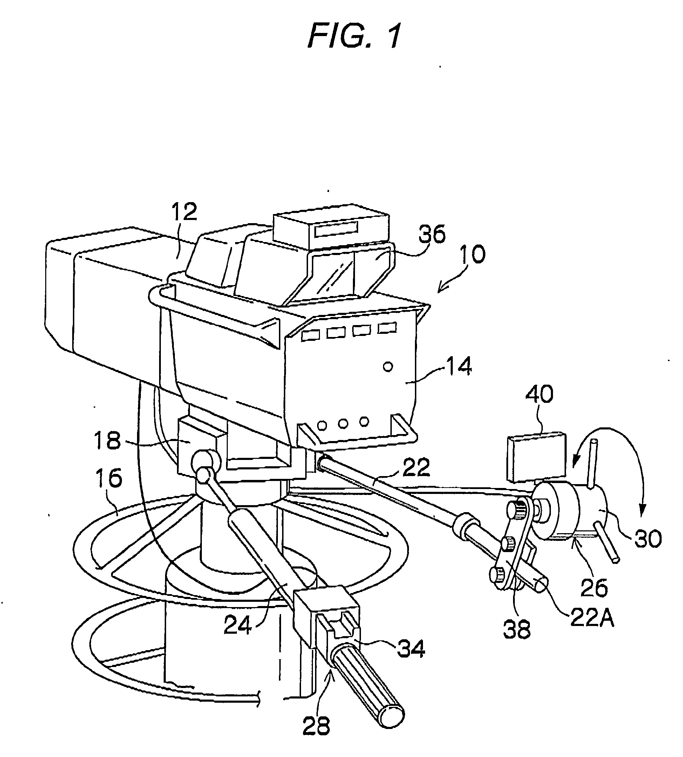

Fig. 1 is an exterior view illustrating a TV camera system according to an embodiment of the invention. As shown in the drawing, the TV camera 10 is generally used in broadcasting or business, includes a lens unit 12 and a camera main body 14, and is supported on a camera platform 18 installed on a pedestal dolly 16.

Two left and right pan rods 22 and 24 are provided to extend from the camera platform 18, a focus demand (a focus controller) 26 is set by a mounting clamp 38 on a grip part 22A of the right pan rod 22, and a zoom demand (a zoom controller) 28 is set on a grip part of the left pan rod 24.

The focus demand 26 is provided with focus knobs 30 that can be turned. When the focus knobs 30 are turned at the time of focus control performed by a manual focus (an MF), a focus control signal, which instructs a focus (a focus lens) to move to the focus position corresponding to the turned position as a target position, is transmitted from the focus demand 26 to the lens unit 12. In response to the signal, the focus lens of the lens unit 12 moves to the target position based on the instruction of the focus control signal.

The zoom demand 28 is provided with a thumb ring 34 that can be turned. When the thumb ring 34 is turned in the left and right directions, a zoom control signal, which instructs a zoom (a zoom lens) to move at the zoom speed corresponding to the turned position as a target speed, is transmitted from the zoom demand 28 to the lens unit 12. In response to the signal, the zoom lens of the lens unit 12 moves in the target speed based on the instruction of the zoom control signal.

Although omitted in the drawings, the focus demand 26 is provided with various operation members relating to the autofocus (the AF), and is equipped with an AF frame control device (an AF frame auto-tracking device) for performing the control (change in position and the like) of the AF frame representing the target subject area (the target area of the AF) brought into focus by the AF. In addition, various operation members of the AF frame control device are also provided on the focus demand 26.

Additionally, as shown in the drawing, a liquid crystal display (an LCD) equipped with touch panel 40 as a component of the AF frame control device is provided on the upper part of the main body of the focus demand 26 by the installation opening, and is connected to the focus demand 26 via a cable which is not shown.

The LCD 40 to be described later means the liquid crystal display 40 equipped with the touch panel. In addition, the LCD 40 can be provided on an arbitrary position other than the upper part of the main body of the focus demand 26. For example, the LCD 40 may be provided on the side of viewfinder 36.

On the camera main body 14, a viewfinder 36, which is a display device, is provided. In order to display an image of a subject being taken by the TV camera 10 on the viewfinder 36, the cameraman can photograph the subject with a desired composition by operating the focus demand 26 and the zoom demand 28 while viewing the image. Furthermore, the photographing video or the photographing image to be described later means a video or an image being photographed by the TV camera 10 at the present time.

On the photographing video displayed on the viewfinder 36, an image of the AF frame indicating a position, a size, and a shape (an aspect ratio) of the AF frame set currently is superimposed. With such a configuration, when the focus control based on the AF is preformed, it is possible to know which area's subject in the photographing video is brought into focus. Further, MF and AF focus controls can be changed by a mode switch provided on the focus demand 26.

Figs. 2, 2-I and 2-II are block diagrams for illustrating an entire configuration of an AF frame auto-tracking system applied to the TV camera system.

The AF frame auto-tracking system 1 shown in Figs. 2, 2-I and 2-II includes the lens unit 12 and a camera main body 14 of the TV camera shown in Fig. 1, a viewfinder 36, and an AF area operating unit 54 integrated in the focus demand 26. In addition, the drawing shows components of the focus demand 26, which is shown in Fig. 1, including a focusing operation section 50, and an image processing unit 58 and an AF frame operation section 60 which constitute the AF frame control device (the AF frame auto-tracking device) mounted on the focus demand 26.

TV camera 10 includes the camera main body 14 of an HD camera corresponding to the Hi-Vision TV [HD (High Definition) TV] system, and the lens unit 12 having a photographing lens (an optical system) set on the lens mount of the camera main body 14.

In the camera main body 14, an image pickup device (for example, a CCD), necessary signal processing circuits, and the like are mounted. After an image formed by the photographing lens of the lens unit 12 is photoelectrically converted by the image pickup device, a signal process necessary for each of the signal processing circuits is performed thereon, and the image is output as a video signal (an HD TV signal) of the HD TV system from a video signal output terminal and the like of the camera main body 14 to the outside.

As shown in Fig. 1, the viewfinder 36 provided on the upper part of the camera main body 14 displays the photographing video of the TV camera 10. The viewfinder 36 displays not only the photographing video but also various information. For example, an image indicating the area (the position, the size, and the shape) of the currently set AF frame is superimposed on the photographing video.

The lens unit 12 includes a photographing lens (a zoom lens) 64 set on the lens mount of the camera main body 14. The photographing lens 64 forms an image of a subject 56 on the image pickup surface of the image pickup device of the camera main body 14. Although omitted in the drawings, movable sections for adjusting photographing conditions of a focus lens group, a zoom lens group, and an aperture diaphragm as components are provided in the photographing lens 64. These movable sections are electrically driven by a motor (a servomechanism). For example, the focus lens group and the zoom lens group are moved in an optical axis direction, focus (subject distance) adjustment is performed by the movement of the focus lens group, and focal length (zoom ratio) adjustment is performed by the movement of the zoom lens group.

In the system relating to the AF, if only at least the focus lens group is electrically driven, the other movable sections may be manually driven.

The lens unit 12 is also equipped with an AF unit 66 and a lens CPU which is not shown. The lens CPU controls the entire system of the lens unit 12 overall. The AF unit 66 is a processing section for acquiring information required to perform the focus control (autofocus adjustment) based on the AF, and includes an AF processing section and an AF image pickup circuit which are not shown.

The AF image pickup circuit is disposed on the lens unit 12 in order to acquire a video signal for AF processing and includes a processing circuit for outputting output signals of the image pickup devices such as CCD and the AF image pickup devices as video signals of a predetermined format. Furthermore, the video signal output from the AF image pickup circuit is a brightness signal.

On the image pickup surface of the AF image pickup device, light of the subject is imaged which is diverged from light of the subject incident on the image pickup device of the camera main body 14 by a half mirror disposed in the optical path of the photographing lens 64. The photographing area and the subject distance (a distance at which the subject is brought into focus) relative to the image pickup area of the AF image pickup device is set to coincide with the photographing area and the subject distance relative to the image pickup area of the image pickup device of the camera main body 14. In addition, the subject image acquired by the AF image pickup device is set to coincide with the subject image acquired by the image pickup device of the camera main body 14. It is not necessary to make the both photographing areas perfectly coincide with each other. For example, the photographing area of the AF image pickup device may be a large area including the photographing area of the image pickup device of the camera main body 14.

The AF processing section acquires a video signal from the AF image pickup circuit, and calculates a focus evaluation value representing a level of contrast of the subject image within the AF area (the AF frame) as the AF target area on the basis of the video signal. For example, a high frequency signal is extracted by a high pass filter from the video signals acquired from the AF image pickup device, and then a signal of the area corresponding to the AF area, which is set as described later, is integrated for each one of screens (each one of frames). The integrated value acquired for each one of the screens mean the level of contrast of the subject image within the AF area, and the integrated value is sent as the focus evaluation value to the lens CPU.

The lens CPU acquires the information of AF frame (the AF frame information) representing the AF area (the outline) from the image processing unit 58 as described later, and allows the AF processing section to specify an area within the AF frame, which is specified by the AF frame information, as the AF area. Then, the focus evaluation value demanded for the image within the AF area (the video signal) is acquired from the AF processing section.

As described above, whenever the video signal per one screen is acquired from the AF image pickup circuit (whenever the AF processing section demands the focus evaluation value), the focus evaluation value is acquired from the AF processing section, and the focus lens group is controlled so that the acquired focus evaluation value becomes the maximum (the largest value), that is, the contrast of the subject image within the AF frame becomes the maximum. For example, the mountain climbing method is generally known as a control method of the focus lens group based on the focus evaluation value. In this method, when the first lens group is moved in a direction increasing the focus evaluation value and a point, at which the focus evaluation value begins to decrease, is detected, the focus lens group is set at this position. In such a manner, the subject within the AF frame is automatically brought into focus.

The above-mentioned AF processing section acquires the video signal from the AF image pickup device mounted in the lens unit 12 in order to calculate the focus evaluation value. However, it may be possible to adopt a configuration in which the video signal of the video photographed by the image pickup device of the camera main body 14 is acquired from the camera main body 14. In addition, anything may be used as the AF unit for automatically bringing into focus the subject within the AF frame.

Here, the AF area 200, as shown in Fig. 3, is set as the tetragonal area relative to the image pickup area 202 of the image pickup device in the camera main body 14. The frame 204 representing the outline is defined as the AF frame. The subject, which is photographed in the AF area 200 (in the AF frame 204) of the image pickup device, is set as a target brought into focus by the AF.

In the specification, the area of the AF frame 204 (the AF area 200) relative to the image pickup area 202 is determined by three factors of a position, a size, and a shape (an aspect ratio) of the AF frame 204. In addition, in the description to the effect that "the area of the AF frame is changed" means change in at least one factor among the three factors of the position, the size, and the shape of the AF frame.

The lens unit 12 is connected directly or through a cable to the camera main body 14, and is able to exchange various information through the serial communication interfaces (SCI) 12a and 14a respectively provided in the lens unit 12 and the camera main body 14. With such a configuration, the AF frame information, which is currently set in the AF unit 66, is also transmitted to the camera main body 14, and the AF frame image corresponding to the position, the size, and the shape of the AF frame, which is currently set in the photographing video displayed on the viewfinder 36, is superimposed by the process in the camera main body 14.

The focusing operation section 50 is a component of the focus demand 26, and is a component included in a general focus demand. The components of the focusing operation section 50 includes the focus knobs 30 shown in Fig. 1, operation members for AF control and MF control such as a mode switch (not shown in the drawings) for switching the AF mode and the MF mode or switching the AF mode type (a continuous mode or a momentary mode) and a AF start switch (not shown in the drawings) for commanding the start of the AF, and a processing circuit for detecting a setting state of the operation members and transmitting a control signal on the basis of the detected setting state.

The focus demand 26 is provided with an interface (I/F) 52 for connecting with the lens unit 12 through the cable. The focusing operation section 50 is connected to the lens unit 12 through the I/F 52 and the cable, and is configured to exchange various signals with the lens CPU through the SCI 12a by using a serial communication.

With such a configuration, the various control signals transmitted from the focusing operation section 50 are sent to the lens CPU, and processes based on the control signal are executed by the lens CPU. For example, when the instruction of the focus control (the AF mode) based on the AF is issued, the focus control based on the AF is performed on the basis of the focus evaluation value which can be obtained from the AF unit 66 as described above. When the instruction of the focus control (the MF mode) based on the MF is issued, the focus control based' on the MF is performed in response to a focus position command signal which is transmitted from the focusing operation section 50 on the basis of the operation of the focus knobs 30.

The image processing unit 58 is a processing section mounted on the focus demand 26 as a component of the AF frame control device, and is a processing section for specifying the area (the position, the size, the shape (the aspect ratio)) of the AF frame, which is set in the AF unit 66 of the lens unit 12, by the AF frame auto-tracking process or manual operation to be described later.

The image processing unit 58 includes a SCI 70. The SCI 70 is connected to the lens unit 12 through the I/F 52, and is configured to exchange various signals with the lens CPU through the SCI 12a. With such a configuration, the AF frame information specifying the area of the AF frame is transmitted from the image processing unit 58 to the lens CPU of the lens unit 12, and the area of the AF frame in the AF unit 66 is set on the basis of the AF frame information.

Further, in the focus demand 26, the image processing unit 58 is provided with a video input connector for receiving the video signal, and to the video input connector, a video output connector of the camera main body 14 is connected through the down converter 68 by using a cable. With such a configuration, an HD TV signal output from the video output connector of the camera main body 14 is converted (down conversion) by a down converter 68 into a video signal (an SDTV signal) of the standard TV [NTSC (Television system committee)] system, and is input to the image processing unit 58.

Detailed description of the above will be given later. However, when the AF frame auto-tracking process is executed, the image processing unit 58 sequentially loads the photographing images for each one screen from the video signal input from the camera main body 14, and performs a process for detecting a predetermined tracking target subject from the inner part of the photographing image. Then, the image processing unit 58 determines the area of the AF frame so as to bring the subject into focus by the AF, and transmits the area of the determined area of the AF frame to the lens CPU of the lens unit 12.

Furthermore, the configuration and the processing contents of the image processing unit 58 will be described later.

The AF frame operation section 60, as the AF frame control device, is provided integrally with the image processing unit 58 in the focus demand 26, and a part or all thereof is provided in a device separated from the focus demand 26, that is, a device separated from the image processing unit 58, and is connected thereto through a cable and the like. In the embodiment, as shown in Fig. 1, the LCD equipped with touch panel 40 is provided separately from the focus demand 26 (the image processing unit 58), and the other components are provided together with the image processing unit 58 in the focus demand 26.

The AF frame operation section 60 is an operation section for mainly performing operations for the AF frame control, and includes an operation member for allowing an operator to manually input instruction information on the area of the AF frame and an operation member for performing the operation for the AF frame auto-tracking for allowing the AF frame to automatically track a desired subject.

As shown in the exterior view of the focus demand 26 of Fig. 4, operation members of the AF frame operation section 60 are formed thereon. The operation members include: a position operation member 100 (for example, a joy stick or a track ball) for vertically moving the position of the AF frame by manual operation of a user; a size operation member 102 (for example, a handle) for changing the size of the AF frame by manual operation; an operation member 104 (for example, a handle) for changing the shape of the AF frame by manual operation; a tracking start switch 108 for instructing start of the AF frame auto-tracking; and a tracking stop switch 110 for instructing stop of the AF frame auto-tracking. Setting states of these operation members 100, 102, 104, 108, and 110 can be read by the image processing unit 58 (the CPU 78 of main board 70 to be described later)

Further, the LCD 40 of the AF frame operation section 60 is operable to input settings such as the AF frame auto-tracking modes by touch operation (tap operation). The image displayed on the LCD 40 is properly changed in accordance with the setting contents by the CPU 78 of the image processing unit 58. The display and operation of the LCD 40 will be described later.

Furthermore, the embodiment shows the aspect in which the AF frame control device having the image processing unit 58 and the AF frame operation section 60 is provided in the focus demand 26. However, the AF frame control device can be formed separately from the focus demand 26. Further, in this case, a part or all of the AF frame operation section 60 may be provided integrally with the image processing unit 58 and may be provided separately.

Next, the configuration and the processing contents of the image processing unit 58 will be described.

The image processing unit 58 mainly includes a main board 70, a pattern matching process calculation board 72, and a face recognition process calculation board 74. The main board 70, the pattern matching process calculation board 72, and the face recognition process calculation board 74 are respectively equipped with CPUs 78, 90, and 92. On each of the boards, each calculation process is performed. The CPUs 78, 90, and 92 are connected via a BUS line or a control line so as to exchange data with each other and perform synchronization among the calculation processes.

The overall processes in the image processing unit 58 are performed in the main board 70. The main board 70 is provided with not only the CPU 78 for performing the calculation process but also a SCI 70a, a decoder (the A/D converter) 76, a superimpose 82, a RAM 80, and the like.

The SCI 70a is, as described above, an interface circuit for performing the serial communication with the SCI 12a of the lens unit 12, and transmits the AF frame information and the like to the lens unit 12.

The decoder 76 is a circuit for converting the video signal (the SDTV signal) of the photographing video of the TV camera 10 input from the down converter 68 to the image processing unit 58 into data which can be digitally processed by the image processing unit 58. The decoder 76 performs an A/D conversion process and the like for converting the analog SDTV signal into a video signal of digital data.

The superimpose 82 is a circuit for synthesizing the video signal of the photographing video obtained by the decoder 76 and the image signal generated by the CPU 78 and outputting and displaying the synthesized video signal to and on the LCD 40. With such a configuration, the photographing video of the TV camera 10 is displayed on the LCD 40 similarly to the viewfinder 36 provided on the camera main body 14. In addition, the AF frame image indicating the area of the currently set AF frame, a menu screen (a menu image) configured to be able to perform the input operation in the touch panel, and the like are displayed on the LCD 40 so as to be superimposed on the photographing video. Furthermore, it is also apparent that only the image generated by the CPU 78 can be displayed without being superimposed on the photographing video.

The RAM 80 is a memory for temporarily storing the data used in the calculation process of the CPU 78.

On the other hand, the pattern matching process calculation board 72 and the face recognition process calculation board 74 are calculation boards for individually performing the pattern matching and face detection/recognition processes. These boards respectively include not only the CPUs 90 and 92 for performing the calculation process but also VRAMs 94 and 96 for temporarily storing the image data.

Further, the image processing unit 58 is provided with a slot 115 for receiving a data card 114 as an external memory such as an SD (Secure Digital) card or a USB. In the image processing unit 58, when the face of the specific person is detected by the face recognition, the identification data representing the face of the specific person in the data card 114 is previously stored, and the data card 114 is inserted into the slot 75, thereby enabling the CPU 78 to read the identification data required for the face recognition from the data card 114.

Subsequently, the control of the AF frame performed by the image processing unit 58 configured as described above will be described together with the process relating to the display and operation of the LCD 40.

First, the display and operation of the LCD 40 will be described. As shown in Fig. 5, a screen 40a of the LCD 40 displays a menu screen (a menu image), which is formed of various buttons 300 to 314, and an AF frame image 204 (it is simply referred to as an AF frame 204), which represents the area of the currently set AF frame, by ' superimposing those on the photographing video of the TV camera 10. The images, which are superimposed on the photographing video, such as the various buttons 300 to 314 of the menu screen and the AF frame 204 are generated by the CPU 78 of the main board 70 in the image processing unit 58 shown in Figs. 2, 2-I and 2-II. These images are displayed on the LCD 40 so as to be superimposed on the photographing video of the TV camera 10 obtained from the decoder 76 in the superimpose 82. Furthermore, the control relating to the display (display contents) of the LCD 40 is performed by the CPU 78.

On the other hand, since the LCD 40 has the touch panel, when the touch operation is performed, that is, when a tip of a finger and the like comes into contact with the screen 40a of the LCD 40, position information representing the touched position (coordinates) is transmitted to the CPU 78. With such a configuration, a type (the tap operation, the double tap operation, and the like) of the operation and the position of the touch operation performed on the screen 40a of the LCD 40 is detected by the CPU 78. Then, the process based on the operation is executed by the CPU 78.

Basic operations in the screen 40a of the LCD 40 include an operation for inputting instructions previously assigned to the respective buttons 300 to 314 and an operation for specifying the area of the AF frame 204. The former operation is the tap operation performed on the positions of the buttons 300 to 314 with the tip of the finger and the like. The later operation for specifying the area of the AF frame 204 is able to; for example, move the AF frame 204 so as to make a desired position be the center of the AF frame 204 by performing the tap operation on the position, on the screen 40a of the LCD 40 displayed on the photographing video. Further, the later operation is able to change the shape and the size of the AF frame 204 by a drag operation that moves a side position or a touched vertex to a dragged position by touching the vertex or the side of the AF frame 204 with the tip of the finger and directly sliding it.

The menu screen (the menu image) displayed on the screen 40a of the LCD 40 will be described. In Fig. 5, the fixation mode selection button 300 displayed as "fixation", the object tracking mode selection button 302 displayed as "object tracking", the face detection tracking mode selection button 304 displayed as "face detection", and the face recognition tracking mode selection button 306 displayed as "face recognition" are buttons for selecting the control modes of the AF frame. By performing the tap operation on any one of the buttons 300 to 306, it is possible to select a desired mode among the fixation mode, the object tracking mode, the face detection tracking mode, and the face recognition tracking mode. Furthermore, the contents of the modes will be described later.

The set button 308 displayed as "set" and the reset button 310 displayed as "reset" are buttons for instructing the start and the stop of the AF frame auto-tracking. These buttons 308 and 310 are displayed only when the control modes (the object tracking mode, the face detection mode), by which an operator instructs the start and the stop of the AF frame auto-tracking, are selected. Furthermore, the set button 308 and the reset button 310 are buttons having the same function as the tracking start switch 108 and the tracking stop switch 110 (see Figs. 1 and 4) of the AF frame operation section 60.

Further, the start of the AF frame auto-tracking is performed in the following way. When a double tap operation (an operation of tapping the same position twice continuously) is performed on the desired position on the screen 40a, the AF frame is set on a position centered on the double-tapped position, and the AF frame auto-tracking is started. Specifically, the first tap operation of the double tap operation functions as an operation of instructing the movement of the AF frame to the tapped position, and the subsequent second tap operation functions as an operation of instructing the start of the AF auto-tracking. With such a configuration, it is possible to omit the operation of instructing the start of the AF frame auto-tracking by performing the tap operation on the set button 308. Thus, it is possible to instruct promptly the start of the AF frame auto-tracking and the setting of the AF frame position. Furthermore, since the start of the AF frame auto-tracking is performed by just the double tap operation, the display of the set button 308 may be not performed.

The AF frame size selection buttons 312 (the small button 312a, the medium button 312b, and the large button 312c) displayed as "small", "medium", and "Large" is buttons for selecting the size of the AF frame 204, of which a rectangular shape (an aspect ratio) is invariant, among different three sizes previously determined. By performing the tap operation on any one of the small button 312a, the medium button 312b, and the large button 312c, it is possible to instantaneously change the size of the AF frame 204. When the small button 312a is tapped, the AF frame is set to have the smallest size, and when the large button 312c is tapped, the AF frame is set to have the largest size.

Here, the embodiment is configured so that the size of the AF frame 204 can be selected from three categories. However, two or four or more categories in size are previously determined, the AF frame size selection buttons corresponding to the respective sizes are displayed, and the respective sizes of the AF frame 204 may be selected therefrom by performing the tap operation on the respective AF frame size selection buttons. Further, not only the size but also the shape of the AF frame may be selected.

The aspect of the selection unit for selecting a desired type of the AF frame from plural types of the AF frame different in size and shape is not limited to the embodiment in which the selection buttons are provided to correspond to the various types. For example, in a state where sequence numbers (Nos. 1 to N) are assigned to the respective plural types of the AF frame previously determined, buttons for sequentially switching the types of the AF frame in accordance with the sequence numbers may be provided. Specifically, it may be allowed that one switch button for switching the types of the AF frame is displayed on the screen 40a of the LCD 40, the current AF frame is changed into the AF frame with the sequence number (which is obtained by adding 1 to the currently set sequence number of the AF frame) which is increased by 1 whenever the switch button is tapped, and when the sequence number of the AF frame becomes the maximum (No. N), then the subsequent sequence number of the AF frame is changed (changed by a toggle type) into No. 1. Further, it may be also allowed that two up and down buttons are displayed, and the current AF frame is changed into the AF frame with the sequence number which is increased by 1 whenever the up button is tapped, and is changed into the AF frame with the sequence number which is decreased by 1 whenever the down button is tapped.

Additionally, it may be possible to adopt a determination method in which selectable types of the AF frame includes AF frames having different sizes (diagonal distances) with a given difference and the AF frames having different shapes (aspect ratios) with a given difference. In addition, it may be allowed that the size or the shape of the AF frame is changed by a given amount whenever the above-mentioned switch button, the up button, or the down button is tapped. At this time, when the button for changing the size of the AF frame and the button for changing the shape of the AF frame are separately provided, it is possible to change both of the size and the shape of the AF frame.

Furthermore, the selection unit for selecting the types of the AF frame is not limited to the aspect in which the above-mentioned button for selecting the types of the AF frame is displayed on the screen 40a of the LCD 40 as described above. Alternatively, it may be allowed that, with the aspect, by providing a mechanical button (a switch) in the main body 26a of the focus demand 26 or the like, which is shown in Fig. 4, as a component of the AF frame operation section 60 of Figs. 2, 2-I and 2-II, the types of the AF frame can be changed by the button.

Further, it may be allowed that the operation, which changes the AF frame 204 to have arbitrary size and shape by dragging the vertex or the side of the AF frame 204 as described above, can be activated with the operation which changes those into the previously determined size and shape in the same manner as the operation of the AF frame size selection button 312. In addition, it may be allowed that, only any one of the operations is activated, and which operation to be activated can be selected by the tap operation and the like performed on the predetermined button displayed on the screen 40a of the LCD 40.

In Fig. 5, the menu display ON/OFF button 314 displayed as "display OFF" is a button for turning off the display of the menu screen (menu image) other than the button 314. When the menu display ON/OFF button 314 is tapped, as shown in Fig. 6, the display of the buttons 300 to 312 on the menu screen is turned off. At this time, the menu display ON/OFF button 314 is displayed as "display ON", and when the menu display ON/OFF button 314 is tapped again, the menu screen is displayed to be superposed on the photographing video as shown in Fig. 5. With such a configuration, the operator can turn the display of the menu screen off in a situation in which the display of the menu screen superposed on the photographing video is unnecessary. As a result, it is possible to prevent the menu screen from disturbing the photographing work.

Further, the display of the menu screen is not limited to the case where the operator determines that it is not necessary as described above, and it may be automatically determined that it is not necessary. For example, when a given time has elapsed from the time when the last touch operation on the screen 40a (or the touch operation for the buttons 300 to 314 of the menu screen) was performed, that is, when the touch operation on the screen 40a was not performed during the given time, it is possible to determine that the display of the menu screen is not necessary.

In the CPU 78 of the main board 70, there may be provided a timing function of automatically turning off the display of the menu screen if the given time elapses when it is determined whether or not the given time elapses from the time when the last touch operation on the screen 40a (or the touch operation for the buttons 300 to 314 of the menu screen) is performed (whether or not the touch operation on the screen 40a is performed during the given time). In this case, it may be allowed that the time of turning off the display of the menu screen can be set to an arbitrary value by a user.

Further, when the operator performs a zooming operation (the operation of the zoom demand 28 shown in Fig. 1) of the lens unit 12, and after the action of the AF frame auto-tracking to be described later is started, it is possible to determine that the display of the menu screen is not necessary.

In the CPU 78 of the main board 70, there may be provided a function of turning off the display of the menu screen when it is detected that the zooming operation is being performed by acquiring the information as to whether or not the zooming operation is performed from the lens unit 12 or when the processing of the AF frame auto-tracking is started. Since the CPU 78 performs the overall processing of the AF frame auto-tracking, it is possible to detect the start of the processing of the AF frame auto-tracking on the basis of the self-processing information.

Further, when the display of the menu screen is turned off by the automatic display OFF function, the menu screen is displayed, for example, by touching an arbitrary position on the screen 40a. When the function of turning on/off the display of the menu screen by means of the menu display ON/OFF button 314 is employed together with the automatic display OFF function, the display of the menu screen is performed by performing the tap operation on the menu display ON/OFF button 314.

On the other hand, when the display of the menu screen is turned on/off, it may be automatically detected from the functions mentioned above that the display of the menu screen is necessary. For example, when the AF frame auto-tracking is performed, it may be difficult to perform the tracking because of some reason. In this case, the operation on the menu screen is needed, and thus it is necessary to display the menu screen again. At this time, effort and time are needed in order for the operator to perform the operation for displaying the menu screen as described above.

Accordingly, in the CPU 78 of the main board 70, there may be provided an automatic display ON function of automatically displaying the menu screen when it is difficult to perform the AF frame auto-tracking in a state where the display of the menu screen is deleted on the screen 40a of the LCD 40. As described above, since the CPU 78 performs the overall processing of the AF frame auto-tracking, it can be detected that it is difficult to perform the AF frame auto-tracking on the basis of the self-processing information.

Subsequently, the control modes of the AF frame, which can be selected by the fixation mode selection button 300, the object tracking mode selection button 302, the face detection tracking mode selection button 304, and the face recognition tracking mode selection button 306 displayed on the screen 40a of Fig. 5, will be described. In the embodiment, the control modes of the AF frame include four modes of a fixation mode, an object tracking mode, a face detection tracking mode, and a face recognition tracking mode. The mode selection can be performed by performing the tap operation on any one of the selection buttons 300, 302, 304, and 306.

The fixation mode is a mode (manual mode) of allowing an operator to specify the frame (the position, the size, and the shape) of the AF area by means of manual operation and fixing the AF frame at the specified position. The fixation mode is a useful mode for the photographing in the news program in which a camera is scarcely moved.

When the fixation mode selection button 300 on the screen 40a of the LCD 40 of Fig. 5 is tapped, then the fixation mode is selected, and the CPU 78 mounted on the main board 70 of the image processing unit 58 performs the processing of the fixation mode.

Specifically, the CPU 78 determines the area of the AF frame on the basis of, as described above, the operation of changing the area of the AF frame on the screen 40a of the LCD 40 and operations of operation members (a position operation member 100, a size operation member 102, and a shape operation member 104) for changing the AF frame 204 provided on the AF frame operation section 60 by means of manual operation. When determining the area of the AF frame, the CPU 78 transmits the AF frame information representing the area of the AF frame through the SCI 70a to the lens CPU of the lens unit 12.

The object tracking mode which is one mode of the AF frame auto-tracking and is a mode of allowing the AF frame to track arbitrary kinds of objects. The object tracking mode is a useful mode for the photographing in the horse race relay broadcasting and the car race relay broadcasting in which an object other than a face of a person should be tracked.

When the object tracking mode selection button 302 on the screen 40a of the LCD 40 of Fig. 5 is tapped, the object tracking mode is selected, and the CPU 78 mounted on the main board 70 of the image processing unit 58 starts the processing of the object tracking mode.

Fig. 7 is a flowchart illustrating a processing procedure of the object tracking mode. Hereinafter, the processing of the object tacking mode will be described with reference to the flowchart. Furthermore, when the object tracking mode is selected, the screen 40a of the LCD 40 displays the menu screen shown in Fig. 5.

The CPU 78 of the main board 70 performs a process (an initial setting processing of the AF frame) for changing the AF frame in accordance with the manual operation similarly to the fixation mode until the operation of instructing the start of the AF frame auto-tracking is given from the AF frame operation section 60 and setting the tracking target. That is, an operator specifies the area of the AF frame so that the area includes a subject image as a tracking target (an AF target), and in accordance therewith, the CPU 78 sets the area of the AF frame (step S10). Furthermore, in Fig. 5, the AF frame 204 is set on the face of the person. However, in the object tracking mode, an object other than the face of the person is determined as the tracking target.

Subsequently, when the operator performs operation to instruct the start of the AF frame auto-tracking, the CPU 78 (and the CPU 90 of the pattern matching process calculation board 72) starts the processing of the AF frame auto-tracking (step S14 to S26) based on the pattern matching, and starts the processing (transmission of the AF frame information) of allowing the lens CPU of the lens unit 12 to specify the area of the AF frame determined by the processing of the AF frame auto-tracking (step S12).

Furthermore, the instruction to start the AF frame auto-tracking is performed by performing the tap operation on the set button 308 or the double tap operation on an arbitrary position (a position at which the AF frame is set) on the screen 40a of the LCD 40 shown in Fig. 5. Further, when the tracking start switch 108 provided as a mechanical switch in the AF frame operation section 60 is pressed, the instruction to start the AF frame auto-tracking is performed. On the screen 40a of the LCD 40, when the start of the AF frame auto-tracking is instructed by the double tap operation, the position setting of the AF frame in step S10 also can be performed. However, it may also be possible to adopt an aspect in which the double tap operation at the arbitrary position is set as only the operation of instructing the start of the AF frame auto-tracking. In this case, the double tap operation is irrespective of the position setting of the AF frame.

Further, when the focus control based on the AF is not performed at the start of the AF frame auto-tracking (the AF mode is not activated), the start of the AF is also instructed in conjunction with the start of the AF frame auto-tracking.

When the processing of the AF frame auto-tracking is started, the CPU 90 of the pattern matching process calculation board 72 loads the image data of the photographing image corresponding to one screen from the decoder 76 in response to the instruction issued from the CPU 78 (step S14). Subsequently, the CPU 90 acquires the area of the currently set AF frame from the CPU 78, and sets (stores) the image within the area of the AF frame in the loaded photographing image as a reference pattern image (step S16). Then, the processing of the following steps S18 to S26 is repeated.

First, the CPU 90 loads the image data of the photographing image corresponding to one screen from the decoder 76 (step S18), and detects the image area coinciding with the reference pattern image in the photographing image by performing the pattern matching process (step S20). Then, the detected image area is notified to the CPU 78 of the main board.

The CPU 78 determines whether or not the reference pattern image moves, that is, whether or not the image area in which the reference pattern is detected precedes the area of the currently set AF frame (step S22). Furthermore, YES is also determined in this determination process when the size of the reference pattern image is changed in the photographing image.

If YES is determined in step S22, the image area detected in step S20 is set (updated) as a new area of the AF frame, and the AF frame information representing the area of the AF frame is transmitted to the lens CPU of the lens unit 12 (step S24).

Further, the CPU 90 of the pattern matching process calculation board 72 updates the image within the image area detected in step S22 as a new reference pattern image (step S26).

If No is determined in step S22, the update of the AF frame in step S24 is not performed, and only the update of the reference pattern in step S26 is performed.

When the processing of step S26 is terminated, the flow returns to the processing of step S18.

Furthermore, when an operator performs the operation of instructing the stop of the AF frame auto-tracking, for example, the tap operation of the reset button 310 displayed on the screen 40a of the LCD 40, the processing of the AF frame auto-tracking is stopped, and the flow returns to step S10. Further, the focus control based on the AF may be stopped.

The face detection tracking mode is one mode of performing the auto-tracking of the AF frame, and a mode of allowing the AF frame to track a face of an arbitrary person. The face detection tracking mode is a useful mode for the photographing in the music program and the like in which a face of a person should be detected and tracked.

When the face detection tracking mode selection button 304 on the screen 40a of the LCD 40 of Fig. 5 is tapped, the face detection tracking mode is selected, and the CPU 78 mounted on the main board 70 of the image process unit 58 starts the processing of the face detection tracking mode. Further, when the face detection tracking mode is selected, the area of the AF frame is automatically set in accordance with the face of the person. Hence, on the screen 40a of the LCD 40, the AF frame size selection button 312 of Fig. 5 is not displayed as shown in Fig. 8.

Fig. 9 is a flowchart illustrating the processing procedure of the face detection tracking mode. Hereinafter, the processing of the face detection tracking mode will be described with reference to the flowchart.

When the face detection tracking mode is selected, first the CPU 78 of the main board 70 performs the process (the initial setting processing of the AF frame) for setting a face of a tracking target. Then, the CPU 78 instructs the CPU 92 of the face identification process calculation board 74 to start the face detection process. Thereby, first, the CPU 92 of the face recognition process calculation board 74 loads the image data of the photographing image corresponding to one frame from the decoder 76 (step S30). Subsequently, the CPU 92 performs the known face detection process of detecting a face (a face image) of an arbitrary person included in the photographing image (step S32). Then, the area of the face image is notified to the CPU 78 of the main board 70. Furthermore, when the face images of the plurality of persons are included in the photographing image, the areas of the plurality of face images are detected, and are notified to the CPU 78.

The CPU 78, as shown in Fig. 8, displays the areas of the detected face images as the face frames 204a, 204b, and 204c on the screen 40a of the LCD 40. Then, when the operator performs the tap operation to select (specifies) a face as a tracking target (an AF target) among the faces of the persons shown by the face frames 204a, 204b, and 204c, the CPU 78 sets the selected face as the tracking target, and sets the face frame of the face, which is set as the tracking target, as the AF frame (step S34).

Furthermore, the face frame before the AF frame setting is displayed by a color different from that of the AF frame. For example, the face frame may be displayed by green, and the AF frame may be displayed by red. Further, when the operator sets the selected face frame as the AF frame, the CPU 78 turns off the display of the face frame on the screen 40a of the LCD 40. Additionally, when the face frame is one, the face frame may be automatically set as the AF frame even if the operator does not perform the operation of selecting the tracking target.

As described above, the AF frame is set by the process (the initial setting processing of the AF frame) of setting the face of the tracking target. After that, when the operator performs the operation of instructing the start of the AF frame auto-tracking, the CPU 78 (and the CPU 92 of the face recognition process calculation board 74) starts the processing of the AF frame auto-tracking (steps S38 to S46) based on the face detection process, and starts the process (transmission of the AF frame information) of allowing the lens CPU of the lens unit 12 to specify the area of the AF frame determined by the processing of the AF frame auto-tracking (step S36).

Here, the instruction to start the AF frame auto-tracking can be performed by performing the tap operation on the set button 308 or the double tap operation on the position of the AF frame similarly to the case of the object tracking mode. Further, in step S34, when the face frame as the face of the tracking target is selected (the AF frame is selected), instead of the tap operation, the double tap operation is performed on the selected face frame, and thereby it is possible to instruct the start of the AF frame auto-tracking while setting the face frame as the AF frame. However, it may also be possible to adopt an aspect in which the double tap operation at the arbitrary position is set as only the operation of instructing the start of the AF frame auto-tracking. In this case, the start of the AF frame auto-tracking is instructed by performing the double tap operation on the arbitrary position, irrespective of the position setting of the AF frame. Further, when the AF frame is set in step S34, the processing of the AF frame auto-tracking may be automatically started. Furthermore, when the focus control based on the AF is not performed at the start of the AF frame auto-tracking similarly to the object tracking mode (the AF mode is not activated), the start of the AF is also instructed in conjunction with the start of the AF frame auto-tracking.

When the processing of the AF frame auto-tracking is started, the CPU 92 of the face recognition process calculation board 74 loads the image data of the photographing image corresponding to one frame from the decoder 76 in response to the instruction to execute the face detection process issued from the CPU 78 similarly to the processing of steps S30 and S32 (step S38). In addition, the CPU 92 performs the face detection processing of detecting the face of the arbitrary person included in the photographing image (step S40). Then, the detected image area is notified to the CPU 78 of the main board 70.

The CPU 78 detects an area, which is most approximate to the area of the currently set AF frame, among the areas of the detected face images as the area of the face image of the tracking target (step S42). Furthermore, in step S40, the area to detect the face may not be the area of the whole photographing image, and may be restricted within the vicinity of the position of the currently set AF frame.

Subsequently, the CPU 78 determines whether or not the face of the tracking target moves, that is, whether or not the area of the detected face image precedes the area of the currently set AF frame (step S44). Furthermore, YES is also determined in this determination process when the size of the face image is changed.

If YES is determined in step $44, the area of the face image detected in step S42 is set (updated) as a new area of the AF frame, and the AF frame information representing the area of the AF frame is transmitted to the lens CPU of the lens unit 12 (step S46). Then, the flow returns to the processing of step S38. If No is determined in step S44, the update of the AF frame in step S46 is not performed, and the flow returns to the processing of step S38.

Furthermore, when an operator performs the operation of instructing the stop of the AF frame auto-tracking, for example, the tap operation of the reset button 310 displayed on the screen 40a of the LCD 40, the processing of the AF frame auto-tracking is stopped, and the flow returns to step S30. Further, the focus control based on the AF may be stopped. The processing of the flowchart terminates the processing of the AF frame auto-tracking.

Further, in the face detection process of step S40, the face image may be not completely detected in the photographing image, and in the detecting of the face image of the tracking target of step S42, apparently the area of the face image most approximate to the area of the currently set AF frame may have no continuity with the area of the current AF frame (those may be too different). In this case, since the tracking is not possible, similarly to the above, the processing of the AF frame auto-tracking is stopped, and the flow returns to step S30.

The face recognition tracking mode is one mode of performing the auto-tracking of the AF frame, and a mode of allowing the AF frame to track the face of the person previously registered as identification data. The face recognition tracking mode is a useful mode for the photographing in the music program and the sports relay broadcast in which the person to be photographed is previously determined.

When the face detection tracking mode selection button 306 on the screen 40a of the LCD 40 of Fig. 5 is tapped, the face recognition tracking mode is selected, and the CPU 78 mounted on the main board 70 of the image processing unit 58 starts the processing of the face recognition tracking mode. Further, when the face recognition tracking mode is selected, the area of the AF frame is automatically set in accordance with the face of the person. Hence, on the screen 40a of the LCD 40, the AF frame size selection button 312 of Fig. 5 is not displayed as shown in Fig. 10. Instead of this, as described later, registered face image display sections 316 (316a to 316c) relating to the face recognition, selection buttons 318a and 318b, and an edit button 320 are displayed. Further, the set button 308 of Fig. 5 for automatically performing the start of the AF frame auto-tracking when the registered face is detected from the identification data as described later is also not displayed.

Fig. 11 is a flowchart illustrating a processing procedure of the face recognition tracking mode. Hereinafter, the processing of the face recognition tracking mode will be described with reference to the flowchart.

When the face recognition tracking mode is selected, first the CPU 78 of the main board 70 performs the process (the initial setting processing of the AF frame) for setting a face of a tracking target. Specifically, in the data card 114 inserted into the slot 115 shown in Figs. 2 and 2-II, the identification data on one person's face or a plurality of faces of the persons as candidates of the tracking target is registered, and the CPU 78 reads the identification data from the data card 114. Then, the CPU 78 instructs the CPU 92 of the face identification process calculation board 74 to start the face recognition process. Here, the identification data includes a plurality of data on one person's characteristics such as different face images on the invisible side, the front side, the left or right side, and the like from the eyes, a distance between the two eyes, a distance between the eyes and the nose, and proportions of those.

When the start of the face recognition process is instructed, the CPU 92 of the face recognition process calculation board 74 loads the image data of the photographing image corresponding to one frame from the decoder 76 (step S50). In addition, the CPU 92 detects the face (the face image) of the arbitrary person included in the photographing image by using the face detection process the same as the face detection tracking mode. Subsequently, the CPU 92 acquires the identification data from the CPU 78 of the main board 70, and performs the face recognition process of determining whether or not the face image detected by the face detection process is the face image of the specific person previously registered as the identification data, on the basis of the identification data (step S52). Furthermore, the face detection process performed in the face recognition tracking mode is set as a part of the face recognition process, and the arbitrary face image is detected by the face detection process also in the face recognition process of step S62 to be described later. Then, an association with the face of the identification data is performed.

When the face recognition process is terminated, the CPU 92 notifies the result to the CPU 78 of the main board 70. In such a manner, the CPU 78 acquires the area of the face image obtained when the face of the specific person registered as the identification data is detected, and the area of the face image obtained when the face of the person unregistered as the identification data is detected.

Next, the CPU 78, as shown in Fig. 10, displays the frames 204a, 204b, and 204c in the areas of the face images of the detected faces of persons on the screen 40a of the LCD 40. When the faces of the persons registered as the identification data is detected by the face recognition process of step S52, names of the persons are also displayed in the face frame. Additionally, as described above, the face images of the persons registered as the identification data are displayed on the registered face image display sections 316 (316a to 316c).

Here, the number of the face images displayed on the registered face image display sections 316 is changed in response to the number of the faces registered as the identification data.

The operator selects the face image as a tracking target among the face images displayed on the registered face image display sections 316 by performing the tap operation on the selection buttons 318a or 318b. Whenever the upper selection button 318a is tapped, the selected face image is changed with the face image just above the currently selected face image. Whenever the lower selection button 318b is tapped, the selected face image is changed with the face image just below the currently selected face image. Furthermore, the face image currently selected in the registered face image display sections 316 is enlarged more than the other face images (see 316b).

In such a manner, when the operator selects the face as the tracking target among the faces registered as the identification data, the CPU 78 sets the selected face as the face of the tracking target (step S54).

Furthermore, by performing the tap operation on the edit button 320, it is possible to edit an order of the face images displayed on the registered face image display sections 316. With such a configuration, for example, the faces of the plurality of persons registered as the identification data may be set as tracking targets in a predetermined order. In accordance with the order, when an order of the face images displayed on the registered face image display sections 316 is set, the faces of the tracking targets can be changed in the predetermined order whenever a single tap operation is performed on the selection button 318a or 318b.

In such a manner, when the face of the tracking target is set, then the CPU 78 determines whether or not the face of the tracking target is detected in step S52 (step S56). If NO is determined, the flow returns to the processing of step S50, and the above-mentioned process is repeated. Specifically, until the face of the tracking target is detected in the photographing image by the face recognition process of step S52, the processing of steps S50 to S56 is repeated.

In contrast, if YES is determined in step S56, that is, if the face of the tracking target is detected in the photographing image, the area of the face image is set as the area of the AF frame (the initial setting processing of the AF frame). Then, the CPU 78 (and the CPU 92 of the face recognition process calculation board 74) starts the processing of the AF frame auto-tracking (steps S60 to S66) based on the face recognition process, and starts the process (transmission of the AF frame information) of allowing the lens CPU of the lens unit 12 to specify the area of the AF frame determined by the processing of the AF frame auto-tracking (step S58).

Furthermore, when the focus control based on the AF is not performed at the start of the AF frame auto-tracking similarly to the object tracking mode or the face detection tracking mode (the AF mode is not activated), the start of the AF is also instructed in conjunction with the start of the AF frame auto-tracking.

When the processing of the AF frame auto-tracking is started, the CPU 92 of the face recognition process calculation board 74 loads the image data of the photographing image corresponding to one screen from the decoder 76 in response to the instruction to execute the face recognition process issued from the CPU 78 (step S60). Further, the CPU 92 acquires the identification data on the face of the tracking target selected in step S54 from the CPU 78. In addition, the CPU 92 detects the face of the tracking target among the photographing image on the basis of the identification data on the face of the tracking target by using the face recognition process the same as that of step S52, and notifies the area of the face image to the CPU 78 (step S62).

Subsequently, the CPU 78 determines whether or not the face of the tracking target moves, that is, whether or not the area of the detected face image precedes the area of the currently set AF frame (step S64). Furthermore, YES is also determined in this determination process when the size of the face image is changed.

If YES is determined in step S64, the area of the face image detected in step S62 is set (updated) as a new area of the AF frame, and the AF frame information representing the area of the AF frame is transmitted to the lens CPU of the lens unit 12 (step S66). Then, the flow returns to the processing of step S60. If No is determined in step S64, the update of the AF frame in step S66 is not performed, and the flow returns to the processing of step S60.

Furthermore, when an operator performs the operation of instructing the stop of the AF frame auto-tracking, for example, the tap operation of the reset button 310 displayed on the screen 40a of the LCD 40, the processing of the AF frame auto-tracking is stopped, and the flow returns to step S50. At this time, the face of the tracking target is not set in anywhere. Further, in conjunction with the stop of the AF frame auto-tracking, the focus control based on the AF may be also stopped.

Further, the operator may change the face of the tracking target into a face different from the current face by using the selection button 318a or 318b during the processing of the AF frame auto-tracking. In this case, the changed new face is set as the face of the tracking target, the processing of the AF frame auto-tracking is stopped, and the flow returns to step S50.

Additionally, for example, the person set as the face of the tracking target may move out of the photographing area. That is, the face of the tracking target may be not detected in the photographing image in the face recognition process of step S62. In this case, since it is determined that the tracking is not possible, the processing of the AF frame auto-tracking is automatically stopped, and the flow returns to step S50.

In the embodiment as described above, it is possible to select a desired mode among the three modes such as the object tracking mode, the face tracking mode, and the face recognition tracking mode as the control mode of the AF frame auto-tracking. However, it may be possible to select only any two modes.

## Claims

1. An autofocus system comprising:
an image pickup unit that takes a subject image formed by an optical system;
an autofocus unit that performs focus adjustment of the optical system so as to bring into focus a subject within a predetermined AF frame area in a photographing image taken by the image pickup unit; and
an AF frame control unit that changes the AF frame area,
wherein the AF frame control unit comprises:
an AF frame auto-tracking unit that allows the AF frame to automatically track a tracking target subject by detecting the tracking target subject in the photographing image taken by the image pickup unit and automatically changing the AF frame so as to correspond to an area of the detected tracking target subject, the AF frame auto-tracking unit having a plurality of tracking modes capable of setting different subjects as the tracking target subject; and
a selection unit that selects auto-tracking of the AF frame based on a desired tracking mode among the plurality of tracking modes.

2. The autofocus system according to claim 1, wherein
the plurality of tracking mode includes at least two tracking modes among
a first tracking mode of setting an arbitrary object as the tracking target subject,
a second tracking mode of setting a face of an arbitrary person as the tracking target subject, and
a third tracking mode of setting a face of a predetermined specific person as the tracking target subject.

3. The autofocus system according to claim 2,
wherein
the AF frame control unit, in the first tracking mode, stores the tracking target subject as a reference pattern and detects the area of the tracking target subject in the photographing image through a pattern matching process of detecting an image area matching with the reference pattern in the photographing image.

4. The autofocus system according to claim 2 or 3,
wherein
the AF frame control unit, in the second tracking mode, detects an image area of the face of the arbitrary person in the photographing image through a face detection process and detects an area of the tracking target subject in the photographing image on the basis of the detected image area.

5. The autofocus system according to any one of claims 2 to 4, wherein
in the third tracking mode, information on the face of the predetermined specific person is set as identification data, and
the AF control unit, in the third tracking mode, detects the area of the tracking target subject in the photographing image by detecting the image area of the face of the specific person in the photographing image through a face recognition process using the identification data.

6. The autofocus system according to any one of claims 1 to 5, wherein
the AF frame control unit further comprises:
a manual change unit that changes the area of the AF frame on the basis of manual operation of an operator.
